(19) Europäisches Patentamt
European Patent Office
Office européen des brevets

(11) EP 2 914 442 B1

(12) # FASCICULE DE BREVET EUROPEEN

(45) Date de publication et mention de la délivrance du brevet:
**14.12.2016 Bulletin 2016/50**

(21) Numéro de dépôt: **13779885.6**

(22) Date de dépôt: **23.10.2013**

(51) Int Cl.:
***B60C 1/00*** *(2006.01)* ***C08J 9/06*** *(2006.01)*
***C08K 3/36*** *(2006.01)* ***C08K 5/098*** *(2006.01)*
***C08K 5/01*** *(2006.01)* ***C08L 25/02*** *(2006.01)*

(86) Numéro de dépôt international:
**PCT/EP2013/072152**

(87) Numéro de publication internationale:
**WO 2014/067826 (08.05.2014 Gazette 2014/19)**

(54) **BANDAGE POUR VEHICULE DONT LA BANDE DE ROULEMENT COMPORTE UNE COMPOSITION DE CAOUTCHOUC THERMO-EXPANSIBLE**

REIFEN FÜR EIN FAHRZEUG MIT EINEM PROFIL MIT EINER WÄRMEEXPANDIERBAREN KAUTSCHUKZUSAMMENSETZUNG

TYRE FOR A VEHICLE, HAVING A TREAD COMPRISING A HEAT-EXPANDABLE RUBBER COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2012 FR 1260373**

(43) Date de publication de la demande:
**09.09.2015 Bulletin 2015/37**

(73) Titulaires:
- **Compagnie Générale des Etablissements Michelin**
  **63000 Clermont-Ferrand (FR)**
- **MICHELIN Recherche et Technique S.A.**
  **1763 Granges-Paccot (CH)**

(72) Inventeurs:
- **FUKASAWA, Hiroko**
  **Tokyo 163-1073 (JP)**
- **OCHIAI, Chika**
  **Tokyo 163-1073 (JP)**
- **PAGANO, Salvatore**
  **F-63040 Clermont-Ferrand Cedex 9 (FR)**

(74) Mandataire: **Ribière, Joel**
**Manufacture Française des Pneumatiques Michelin**
**23, place des Carmes-Déchaux**
**DGD/PI - F35 - Ladoux**
**63040 Clermont-Ferrand Cedex (FR)**

(56) Documents cités:
**WO-A1-2011/051203 WO-A1-2011/064128**
**FR-A1- 2 877 348**

- **PRANEE PHINYOCHEEP, SAYAN DUANGTHONG: "Ultraviolet-Curable Liquid Natural Rubber", JOURNAL OF APPLIED POLYMER SCIENCE, vol. 78, no. 8, 21 novembre 2000 (2000-11-21), pages 1478-1485, XP002693608,**
- **C. DECKER, T. NGUYEN THI VIE AND H. LE XUAN: "Photoréticulation de caoutchoucs fonctionnalisés - V. Polymérisation radicalaire de caoutchouc à groupements acrylates", EUR. POLYM. J., vol. 32, no. 5, 1 mai 1996 (1996-05-01), pages 559-567, XP002693609,**
- **C. DECKER, H. LE XUAN AND NGUYEN THI VIET: "Photocrosslinking of Functionalized Rubber. III. Polymerization of Multifunctional Monomers in Expoxidized Liquid Natural Rubber", JOURNAL OF POLYMER SCIENCE: PART A: POLYMER CHEMISTRY, vol. 34, no. 9, 15 juillet 1996 (1996-07-15), pages 1771-1781, XP002693610,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 914 442 B1

## Description

### 1. DOMAINE DE L'INVENTION

L'invention est relative aux compositions caoutchouteuses utilisées comme bandes de roulement de bandages pour véhicules, pneumatiques ou non-pneumatiques, en particulier de bandages « hiver » aptes à rouler sur des sols recouverts de glace ou verglas sans être pourvus de clous (aussi appelés bandages *"studless"*).

Elle est plus particulièrement relative aux bandages pour véhicule, notamment bandages hiver, dont la bande de roulement est spécifiquement adaptée à un roulage sous des conditions dites de "glace sèche" ou "glace froide" correspondant à un domaine de températures typiquement inférieures à -5°C, tout en satisfaisant aussi aux conditions dites de "glace fondante" rencontrées dans un domaine de températures comprises entre -5°C et 0°C, domaine dans lequel de manière connue, la pression des bandages au passage d'un véhicule provoque une fusion superficielle de la glace qui se recouvre d'un mince film d'eau nuisible à l'adhérence de ces bandages.

### 2. ETAT DE LA TECHNIQUE

Pour éviter les effets néfastes des clous, notamment leur forte action abrasive sur le revêtement du sol lui-même et un comportement routier notablement dégradé sur sol sec, les manufacturiers de bandages ont proposé différentes solutions consistant à modifier la formulation des compositions de caoutchouc elles-mêmes.

Ainsi, il a été proposé tout d'abord d'incorporer des particules solides à grande dureté, telle que par exemple du carbure de silicium (voir par exemple US 3 878 147), dont certaines viennent affleurer la surface de la bande de roulement au fur et à mesure de l'usure de cette dernière, et entrent donc en contact avec la glace. De telles particules, aptes à agir en définitive comme des micro-clous sur de la glace dure, grâce à un effet de "griffe" bien connu, restent relativement agressives vis-à-vis du sol ; elles ne sont pas bien adaptées aux conditions de roulage sur une glace fondante.

D'autres solutions ont donc été proposées, consistant notamment à incorporer des poudres hydrosolubles (i.e., qui peuvent se dissoudre dans l'eau) dans la composition constitutive de la bande de roulement. De telles poudres se solubilisent plus ou moins au contact de la neige ou de la glace fondue, ce qui permet d'une part la création à la surface de la bande de roulement de porosités susceptibles d'améliorer l'accrochage de la bande de roulement sur le sol et d'autre part la création de gorges jouant le rôle de canaux d'évacuation du film liquide créé entre le bandage et le sol. A titre d'exemples de telles poudres hydrosolubles, on peut citer par exemple l'emploi de poudre de cellulose, de PVA (alcool polyvinylique) ou d'amidon, de poudres de gomme de guar ou de gomme de xanthane, ou encore de poudre de sulfate de magnésium ou de potassium (voir par exemple demandes de brevet JP 3-159803, JP 2002-211203, WO 2008/080750, WO 2008/080751, WO 2010/009850, WO 2011/073188, WO 2011/086061, WO 2012/052331, WO 2012/085063).

Il a également été proposé d'utiliser des particules de poudre qui ne sont ni à haute dureté ni hydrosolubles, aptes malgré tout à générer une microrugosité de surface efficace (voir en particulier demandes de brevet WO 2009/083125 et WO 2009/112220).

Enfin, pour améliorer les performances d'adhérence sur glace fondante d'une bande de roulement, il est également bien connu d'utiliser une couche de caoutchouc mousse à base d'élastomère diénique, d'un agent d'expansion *("blowing agent"*) et divers autres additifs. Ces agents d'expansion, tels que par exemple des composés nitro, sulfonyl ou azo, sont aptes à libérer lors d'une activation thermique, par exemple lors de la vulcanisation du bandage, une quantité de gaz importante, notamment de l'azote, et ainsi conduire à la formation de bulles au sein d'un matériau suffisamment mou tel qu'une composition de caoutchouc comportant de tels agents d'expansion.

De telles formulations de caoutchouc mousse pour bandages hiver ont été décrites par exemple dans les documents brevet JP 2003-183434, JP 2004-091747, JP 2006-299031, JP 2007-039499, JP 2007-314683, JP2008-001826, JP 2008-150413, EP 826 522, US 5 147 477, US 6 336 487, ainsi que dans la demande plus récente WO 2011/064128.

### 3. BREVE DESCRIPTION DE L'INVENTION

Au cours de leurs recherches sur la technologie ci-dessus relative à l'utilisation de caoutchouc mousse, les Demanderesses ont découvert une formulation spécifique à base d'un agent d'expansion, d'un composé thermofusible et d'une résine polymère liquide photoréticulable combinés, qui permet d'obtenir une très bonne adhérence sur glace, à la fois sur glace sèche et sur glace fondante.

En conséquence, la présente invention concerne un bandage dont la bande de roulement comporte, à l'état non vulcanisé, une composition de caoutchouc thermo-expansible comportant au moins un élastomère diénique, plus de 50 pce d'une charge renforçante non-noire, optionnellement du noir de carbone à un taux inférieur à 3 pce, entre 2

et 25 pce d'un agent d'expansion, entre 2 et 25 pce d'un composé thermofusible dont la température de fusion est comprise entre 60°C et 220°C, et entre 5 et 50 pce d'une résine polymère liquide photoréticulable.

L'invention concerne également un bandage à l'état vulcanisé obtenu après cuisson (vulcanisation) du bandage cru conforme à l'invention tel que décrit ci-dessus.

Les bandages de l'invention sont particulièrement destinés à équiper des véhicules à moteur de type tourisme, incluant les véhicules 4x4 (à quatre roues motrices) et véhicules SUV (*"Sport Utility Vehicles"*), des véhicules deux roues (notamment motos) comme des véhicules industriels choisis en particulier parmi camionnettes et "poids-lourd" (i.e., métro, bus, engins de transport routier tels que camions, tracteurs).

L'invention ainsi que ses avantages seront aisément compris à la lumière de la description et des exemples de réalisation qui suivent.

## 4. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Le bandage de l'invention a donc pour caractéristique essentielle que sa bande de roulement, à l'état non vulcanisé, comporte une composition de caoutchouc thermo-expansible (au moins pour la partie supérieure de la bande de roulement qui vient directement en contact avec la surface de la route) comportant au moins:

- un (au moins un) élastomère diénique ;
- plus de 50 pce d'une (au moins une) charge renforçante non-noire ;
- optionnellement du noir de carbone à un taux inférieur à 3 pce ;
- entre 2 et 25 pce d'un (au moins un) agent d'expansion ;
- entre 2 et 25 pce d'un (au moins un) composé thermofusible dont la température de fusion est comprise entre 60°C et 220°C ;
- entre 5 et 50 pce d'une (au moins une) résine polymère liquide photoréticulable.

Les différents composants ci-dessus sont décrits en détail ci-après.

### 4.1. Elastomère diénique

Par élastomère (ou caoutchouc, les deux termes étant synonymes) du type "diénique", on rappelle que doit être entendu un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". Les caoutchoucs butyl, ainsi que par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels

silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973). A titre d'autres exemples de tels élastomères fonctionnalisés, on peut citer également des élastomères (tels que SBR, BR, NR ou IR) du type époxydés.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse ("Tg" - mesurée selon ASTM D3418-82) de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Selon un mode de réalisation particulièrement préférentiel de l'invention, l'élastomère diénique est choisi dans le groupe constitué par le caoutchouc naturel, les polyisoprènes de synthèse, les polybutadiènes ayant un taux de liaisons cis-1,4 supérieur à 90%, les copolymères de butadiène-styrène et les mélanges de ces élastomères.

Selon un mode de réalisation plus particulier et préférentiel, la composition de caoutchouc thermo-expansible comporte 50 à 100 pce de caoutchouc naturel ou de polyisoprène de synthèse, ledit caoutchouc naturel ou polyisoprène de synthèse pouvant être utilisé notamment en coupage (mélange) avec au plus 50 pce d'un polybutadiène ayant un taux de liaisons cis-1,4 supérieur à 90%.

Selon un autre mode de réalisation particulier et préférentiel, la composition de caoutchouc thermo-expansible comporte 50 à 100 pce d'un polybutadiène ayant un taux de liaisons cis-1,4 supérieur à 90%, ledit polybutadiène pouvant être utilisé notamment en coupage avec au plus 50 pce de caoutchouc naturel ou polyisoprène de synthèse.

Aux élastomères diéniques des bandes de roulement selon l'invention pourraient être associés, en quantité minoritaire, des élastomères synthétiques autres que diéniques, voire des polymères autres que des élastomères, par exemple des polymères thermoplastiques.

4.2. Charge renforçante non-noire

Par "charge renforçante non-noire", doit être entendu ici toute charge inorganique voire organique autre que du noir de carbone, quelles que soient sa couleur (autre que noire) et son origine (naturelle ou de synthèse), parfois appelée charge "minérale", charge "blanche" ou charge "claire" par opposition au noir de carbone, cette charge non-noire étant capable de renforcer à elle seule, sans autre moyen qu'un éventuel agent de couplage intermédiaire, une composition de caoutchouc destinée à la fabrication d'une bande de roulement de bandage, en d'autres termes apte à remplacer, dans sa fonction de renforcement, un noir de carbone conventionnel de grade pneumatique pour bande de roulement.

Préférentiellement, la charge renforçante non-noire est une charge inorganique, plus particulièrement une charge du type siliceuse ou alumineuse, ou un mélange de ces deux types de charges.

La silice ($SiO_2$) utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. Les silices précipitées hautement dispersibles (dites "HDS") sont préférées, en particulier lorsque l'invention est mise en oeuvre pour la fabrication de bandage présentant une faible résistance au roulement ; comme exemples de telles silices, on peut citer les silices « Ultrasil » 7000 de la société Evonik, les silices « Zeosil » 1165 MP, 1135 MP et 1115 MP de la société Rhodia, la silice « Hi-Sil » EZ150G de la société PPG, les silices « Zeopol » 8715, 8745 ou 8755 de la Société Huber, les silices telles que décrites dans la demande WO 03/016387.

L'alumine ($Al_2O_3$) renforçante utilisée préférentiellement est une alumine hautement dispersible ayant une surface BET allant de 30 à 400 $m^2/g$, plus préférentiellement entre 60 et 250 $m^2/g$, une taille moyenne de particules au plus égale à 500 nm, plus préférentiellement au plus égale à 200 nm. Comme exemples non limitatifs de telles alumines renforçantes, on peut citer notamment les alumines "Baikalox A125" ou "CR125" (société Baïkowski), "APA-100RDX" (Condéa), "Aluminoxid C" (Degussa) ou "AKP-G015" (Sumitomo Chemicals).

A titre d'autres exemples de charge inorganique susceptible d'être utilisée dans les compositions de caoutchouc selon l'invention peuvent être encore cités des (oxyde-)hydroxydes d'aluminium, des aluminosilicates, des oxydes de titane, des carbures ou nitrures de silicium, tous du type renforçants tels que décrits par exemple dans les demandes WO 99/28376, WO 00/73372, WO 02/053634, WO 2004/003067, WO 2004/056915.

Lorsque les bandes de roulement selon l'invention sont destinées à des bandages à faible résistance au roulement, la charge renforçante non-noire utilisée, en particulier s'il s'agit d'une charge inorganique renforçante telle que silice, a de préférence une surface BET comprise entre 60 et 350 m2/g. Un mode de réalisation avantageux de l'invention consiste à utiliser une charge non-noire, en particulier une charge inorganique renforçante telle que silice, ayant une surface spécifique BET élevée, comprise dans un domaine de 130 à 300 $m^2$/g, en raison du haut pouvoir renforçant reconnu de telles charges. Selon un autre mode préférentiel de réalisation de l'invention, on peut utiliser une charge non-noire présentant une surface spécifique BET inférieure à 130 $m^2$/g, préférentiellement dans un tel cas comprise entre 60 et 130 $m^2$/g (voir par exemple demandes WO03/002648 et WO03/002649 précitées).

L'état physique sous lequel se présente la charge renforçante non-noire (en particulier inorganique) est indifférent, que ce soit sous forme de poudre, de microperles, de granulés, de billes ou toute autre forme densifiée appropriée. Bien entendu, on entend également par charge renforçante non-noire des mélanges de différentes charges renforçantes non-noires, en particulier des charges inorganiques telles que des charges siliceuses et/ou alumineuses hautement dispersibles telles que décrites précédemment.

Préférentiellement, une telle charge inorganique renforçante consiste en des nanoparticules dont la taille moyenne en masse est inférieure à 500 nm, le plus souvent comprise entre 20 et 200 nm, en particulier et plus préférentiellement comprise entre 20 et 150 $\mu$m. Cette taille moyenne peut être mesurée de manière bien connue, après dispersion par désagglomération aux ultrasons de la charge à analyser dans l'eau (ou solution aqueuse contenant un agent tensioactif), par exemple au moyen d'un sédimentomètre centrifuge à détection rayons X type « XDC » (X-rays Disk Centrifuge), commercialisé par la société Brookhaven Instruments, selon le mode opératoire qui suit : on réalise une suspension de 3,2 g d'échantillon de charge inorganique à analyser dans 40 ml d'eau, par action durant 8 minutes, à 60% de puissance (60% de la position maxi du *"output control*"), d'une sonde ultrasons de 1500 W (sonificateur Vibracell 3/4 pouce commercialisé par la société Bioblock); après sonification, on introduit 15 ml de la suspension dans le disque en rotation ; après sédimentation pendant 120 minutes, la distribution en masse des tailles de particules et la taille moyenne en masse des particules $d_w$ sont calculées par le logiciel du sédimentomètre XDC.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression *relative p/po :* 0.05 à 0.17). La surface spécifique CTAB est la surface externe déterminée selon la norme française NF T 45-007 de novembre 1987 (méthode B).

De préférence, la charge renforçante non-noire est de la silice.

De manière préférentielle, le taux de charge renforçante non-noire, en particulier de silice, est compris entre 50 et 150 pce, notamment dans un domaine de 70 à 120 pce.

Pour coupler la charge renforçante non-noire à l'élastomère diénique, on peut utiliser de manière bien connue un agent de couplage (ou agent de liaison) au moins bifonctionnel destiné à assurer une connexion suffisante, de nature chimique et/ou physique, entre la charge (surface de ses particules) et l'élastomère diénique. On utilise en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (I) suivante:

(I) $$Z - A - S_x - A - Z ,$$

dans laquelle:

- x est un entier de 2 à 8 (de préférence de 2 à 5) ;
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- Z répond à l'une des formules ci-après:

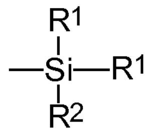 ; 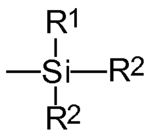 ; 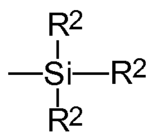 ,

dans lesquelles :

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{l8}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

A titre d'exemples de silanes polysulfurés, on citera plus particulièrement les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, ou le disulfure de bis-(triéthoxysilylpropyle), en abrégé TESPD. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane ($R^2$ = OH dans la formule (I) ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc selon l'invention, la teneur en agent de couplage est préférentiellement comprise entre 2 et 12 pce, plus préférentiellement entre 3 et 8 pce.

La composition de caoutchouc de la bande de roulement du bandage de l'invention est dépourvue de noir de carbone ou en comporte moins de 3 pce, de préférence moins de 2 pce, ceci afin d'éviter que le noir de carbone puisse jouer, en raison de ses propriétés anti-UV connues, un rôle antagoniste donc non souhaitable par rapport à la photoréticulation visée de la résine polymère liquide photoréticulable.

Préférentiellement, on utilise du noir de carbone en très faible quantité, entre 0,05 et 2,0 pce, en particulier entre 0,05 et 1,5 pce, fourchette de concentration étroite dans laquelle le noir conserve sa fonction d'agent de coloration noire de la composition mais ne remplit plus celle d'agent anti-UV.

Comme noirs de carbone conviennent tous les noirs de carbone susceptibles d'apporter une coloration noire aux compositions de caoutchouc, notamment les noirs du type HAF, ISAF et SAF connus de l'homme du métier et conventionnellement utilisés dans les bandages. Parmi ces derniers, on peut citer les noirs de carbone renforçants des séries (grades ASTM) 100, 200 ou 300 utilisés dans les bandes de roulement de ces bandages (par exemple N115, N134, N234, N326, N330, N339, N347, N375), mais encore ceux du type non-renforçants (car moins structurés) des séries plus élevées 400 à 700 (par exemple les noirs N660, N683, N772). On pourrait aussi utiliser à titre d'exemple des noirs non-renforçants dits "noirs d'encre" utilisés comme pigments noirs dans les encres d'imprimerie, les peintures.

Les noirs de carbone peuvent être utilisés à l'état isolé, tels que disponibles commercialement, ou sous tout autre forme, par exemple comme support de certains des additifs de caoutchouterie utilisés.

4.3. Agent d'expansion et composé thermofusible associé

De manière connue, un agent d'expansion (« *blowing agent* » en anglais) est un composé décomposable thermiquement, destiné à libérer lors d'une activation thermique, par exemple lors de la vulcanisation du bandage, une quantité importante de gaz (par exemple azote ou dioxyde carbone) et ainsi conduire à la formation de bulles. La libération de gaz dans la composition de caoutchouc provient donc de cette décomposition thermique de l'agent d'expansion.

Il existe des agents d'expansion physiques ou chimiques, du type endothermiques ou exothermiques. On utilise préférentiellement des agents d'expansion chimiques, plus préférentiellement des agents d'expansion chimiques du type exothermiques comme par exemple des composés diazo, dinitroso, hydrazides, carbazides, semi-carbazides, tétrazoles, carbonates, citrates, tels qu'ils ont été décrits notamment dans la demande précitée WO 2011/064128.

L'agent d'expansion utilisé préférentiellement est un carbonate ou hydrogénocarbonate, en particulier un carbonate ou hydrogénocarbonate (aussi appelé bicarbonate) de sodium (Na), de potassium (K) ou d'ammonium ($NH_4$).

Plus préférentiellement, il s'agit d'un carbonate choisi dans le groupe constitué par carbonate de sodium, hydrogénocarbonate de sodium, carbonate de potassium, hydrogénocarbonate de potassium, et les mélanges de tels carbonates (y compris, bien entendu, leurs formes hydratées). Un tel agent d'expansion a l'avantage de ne dégager que du dioxyde de carbone et de l'eau lors de sa décomposition ; il est donc particulièrement favorable à l'environnement. On utilise particulièrement l'hydrogénocarbonate ou bicarbonate de sodium ($NaHCO_3$).

Préférentiellement, le taux de cet agent d'expansion est compris entre 5 et 25 pce, plus préférentiellement entre 8 et 20 pce.

Une caractéristique essentielle de l'invention est d'ajouter à l'agent d'expansion précédemment décrit un composé thermofusible dont la température de fusion est comprise entre 60°C et 220°C, de préférence entre 100°C et 200°C, plus préférentiellement entre 120°C et 180°C. Le taux de ce composé thermofusible est compris entre 2 et 25 pce, de préférence entre 2 et 20 pce, notamment entre 2 et 15 pce. Il a pour fonction de se transformer en liquide dans le domaine de température spécifique indiqué ci-dessus, avant que ou au moment où l'agent d'expansion se décompose thermiquement et libère des bulles de gaz.

Tout composé présentant une température de fusion dans les domaines indiqués ci-dessus est susceptible de convenir. On pourra utiliser notamment les additifs de caoutchouterie connus de l'homme du métier comme étant compatibles, tant sous leur forme (par exemple sous forme de poudre) que par leur nature chimique, avec des compositions de caoutchouc usuelles pour bandages.

A titre d'exemples, on peut citer notamment des polymères thermoplastiques telles que polyéthylène ou polypropylène ; des résines plastifiantes hydrocarbonées thermoplastiques à haute température de transition vitreuse (Tg), dont la température de fusion (ou ce qui est ici considéré comme équivalent, la température de ramollissement mesurée par exemple selon le méthode connue *"Ring and Ball"* - norme ISO 4625) est comprise dans les domaines ci-dessus ; de l'urée ou un dérivé thermofusible de l'urée ; de tels composés ont été décrits plus en détail dans la demande précitée WO 2011/064128.

La température de fusion est une constante physique de base bien connue (disponible par exemple dans *"Handbook of Chemistry and Physics"*) des composés thermofusibles, organiques ou inorganiques ; elle pourra être contrôlée par toute méthode connue, par exemple par la méthode de Thiele, la méthode du banc de Kôfler ou encore par analyse DSC.

Le composé thermofusible préférentiellement utilisé est un acide carboxylique. Tout acide carboxylique présentant une température de fusion comprise entre 60°C et 220°C (donc solide à 23°C), de préférence entre 100°C et 200°C, en particulier entre 120°C et 180°C, est susceptible de convenir.

En se dispersant de manière homogène dans la composition, lors de sa fusion dans le domaine de température spécifique indiqué ci-dessus, cet acide carboxylique a pour fonction d'activer chimiquement (i.e., par réaction chimique) l'agent d'expansion qui, lors de sa décomposition thermique, va ainsi libérer beaucoup plus de bulles de gaz ($CO_2$ et $H_2O$ que s'il était utilisé seul.

Les acides carboxyliques peuvent être des monoacides, diacides ou triacides, ils peuvent être aliphatiques ou aromatiques ; ils peuvent également comporter des groupements fonctionnels supplémentaires (autres que COOH) tels que des groupes hydroxyle (OH), des groupes cétone (C=O) ou encore des groupes porteurs d'insaturation éthylénique.

Selon un mode de réalisation préférentiel, le pKa (Ka constante d'acidité) de l'acide carboxylique est supérieur à 1, plus préférentiellement compris entre 2,5 et 12, en particulier compris entre 3 et 10.

Selon un autre mode de réalisation préférentiel, combiné ou non au précédent, l'acide carboxylique comporte, le long de sa chaîne hydrocarbonée, de 2 à 22 atomes de carbone, de préférence de 4 à 20 atomes de carbone.

Les monoacides aliphatiques comportent de préférence, le long de leur chaîne hydrocarbonée, au moins 16 atomes de carbone ; on peut citer à titre d'exemples l'acide palmitique (C16), l'acide stéarique (C18), l'acide nonadécanoique (C19), l'acide béhénique (C20) et leurs différents mélanges. Les diacides aliphatiques comportent de préférence, le long de leur chaîne hydrocarbonée, de 2 à 10 atomes de carbone ; on peut citer à titre d'exemples l'acide oxalique (C2), l'acide malonique (C3), l'acide succinique (C4), l'acide glutarique (C5), l'acide adipique (C6), l'acide pimellique (C7), l'acide subérique (C8), l'acide azélaique (C9), l'acide sébacique (C10) et leurs différents mélanges. A titre de monoacide aromatique, on peut citer par exemple l'acide benzoïque. Les acides comportant des groupes fonctionnels peuvent être des monoacides, diacides ou triacides, du type aliphatiques comme aromatiques ; on peut citer à titre d'exemples l'acide tartrique, l'acide malique, l'acide maléique, l'acide glycolique, l'acide $\alpha$-cétoglutarique, l'acide salycilique, l'acide phtalique ou encore l'acide citrique.

De manière préférentielle, l'acide carboxylique est choisi dans le groupe constitué par l'acide palmitique, l'acide stéarique, l'acide nonadécanoique, l'acide béhénique, l'acide oxalique, l'acide malonique, l'acide succinique, l'acide glutarique, l'acide adipique, l'acide pimellique, l'acide subérique, l'acide azélaique, l'acide sébacique, l'acide benzoïque, l'acide tartrique, l'acide malique, l'acide maléique, l'acide glycolique, l'acide $\alpha$-cétoglutarique, l'acide salycilique, l'acide phtalique, l'acide citrique et les mélanges de ces acides.

Plus particulièrement, l'acide carboxylique est choisi dans le groupe constitué par l'acide malique, l'acide $\alpha$-cétoglutarique, l'acide citrique, l'acide stéarique et leurs mélanges. Plus préférentiellement encore, est utilisé l'acide

citrique, l'acide stéarique ou un mélange de ces deux acides.

Préférentiellement, pour l'obtention d'une adhérence optimale de la bande de roulement sur la glace, la quantité totale d'agent d'expansion (en particulier de carbonate ou hydrogénocarbonate) et de composé thermofusible (en particulier d'acide carboxylique) est supérieure à 10 pce, de préférence comprise entre 10 et 40 pce. Cette quantité totale est plus préférentiellement supérieure à 15 pce, en particulier comprise entre 15 et 40 pce.

4.4. Résine polymère liquide photoréticulable

Une autre caractéristique essentielle de la présente invention réside dans l'utilisation d'une résine polymère liquide photoréticulable dans la composition de caoutchouc formant au moins la surface de la bande de roulement selon l'invention, c'est-à-dire la portion de la bande de roulement qui est destinée à entrer au contact de la route lors du roulage du bandage.

Ce polymère peut-être un oligomère, un pré-polymère, un homopolymère ou un copolymère. Sa caractéristique essentielle est qu'il est d'une part liquide (à température ambiante, soit 23°C) à l'état non (photo)réticulé et d'autre part fonctionnalisé c'est-à-dire porteur d'un ou plusieurs groupes ou fonctions réticulables (polymérisables) sous l'action du rayonnement UV. La conséquence est un durcissement de la matrice de caoutchouc comportant ce type de polymère, lorsque cette matrice, tout au moins sa surface, est exposée aux UV.

Préférentiellement, ce polymère est un oligomère, typiquement comportant 3 à 20 unités monomère. Dans un tel cas préférentiel, le nombre de fonctions capables de réagir sous l'action des UV est préférentiellement compris dans un domaine de 1 à 4 par squelette hydrocarboné oligomère. La ou les fonctions réticulables sont plus préférentiellement en position téléchélique, c'est-à-dire aux extrémités dudit squelette hydrocarboné oligomère.

Selon un mode de réalisation préférentiel, on utilise une résine photoréticulable du type radicalaire (polymérisant par un mécanisme radicalaire) ou cationique (polymérisant par voie cationique).

Plus préférentiellement, la résine photoréticulable est choisie dans le groupe constitué par les résines acrylate, méthacrylate, époxyde, oxétane, polyester insaturé, vinyléther, vinylester, et leurs mélanges. De telles dénominations se réfèrent de manière bien connue à la nature des groupes fonctionnels photo-réticulables (ou photo-polymérisables) portés par le polymère (ou préférentiellement oligomère) constituant le squelette hydrocarboné de ces résines.

Plus préférentiellement encore, parmi celles énoncées ci-dessus, la résine photoréticulable utilisée est une résine acrylate (par exemple monoacrylate, diacrylate, triacrylate, époxy-acrylate, époxy-diacrylate, uréthane-acrylate, uréthane-diacrylate) ou une résine méthacrylate (par exemple monométhacrylate, diméthacrylate, uréthane-monométhacrylate, uréthane-diméthacrylate).

On peut toutefois citer, à titre d'autres exemples possibles, les résines fumarate (par exemple monofumarate, difumarate), maléate (par exemple monomaléate, dimaléate), et les mélanges de telles résines.

Selon un autre mode de réalisation préférentiel, le polymère ou oligomère liquide constituant la résine est un polymère du type diénique ; en particulier, ce polymère diénique, par définition liquide, est de préférence un polybutadiène ou polyisoprène porteur du groupe fonctionnel photoréticulable.

Ainsi, plus préférentiellement encore, la résine polymère liquide photoréticulable est un poly(butadiène-acrylate) ou un poly(butadiène-méthacrylate) ou un mélange des deux.

La masse molaire moyenne en masse (notée Mw) du polymère liquide précédemment décrit, en particulier lorsqu'il s'agit d'un polymère diénique liquide, est de préférence comprise entre 200 et 5000 g/mol. Cette grandeur est bien connue de l'homme du métier, disponible notamment auprès des fournisseurs de polymère, mesurable par ailleurs par des techniques conventionnelles telles que GPC *("Gel Permeation Chromatography"*) ou SEC (*"Size Exclusion Chromatography").*

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, par exemple tétrahydrofuranne à une concentration de 1 g/litre. Puis la solution est filtrée sur un filtre, par exemple de porosité 0,45 μm, avant injection dans l'appareillage. L'appareillage utilisé est par exemple une chaîne chromatographique "Waters alliance". Le solvant d'élution est par exemple le tétrahydrofuranne, le débit est de 0,7 ml/min, la température du système est de 35°C. On utilise par exemple un jeu de 4 colonnes "Waters" en série (dénominations "Styragel HMW7", " Styragel HMW6E", et deux "Styragel HT6E"). Le volume injecté de la solution de l'échantillon de polymère est par exemple de 100 μl. Le détecteur est un réfractomètre différentiel (par exemple "Waters 2410") pouvant être équipé d'un logiciel associé d'exploitation des données (par exemple "Waters Millenium"). Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn).

La composition de caoutchouc peut comporter également, en combinaison avec la résine polymère liquide

photoréticulable précédemment décrite, un photo-amorceur destiné à favoriser, accélérer le processus de photoréticulation de surface de la bande de roulement lorsque cette dernière est soumise à une exposition au rayonnement UV.

De manière connue, les photo-amorceurs (également appelés photo-initiateurs ou photo-activateurs) sont des composés stables aptes à libérer, lorsqu'ils sont exposés à une lumière de longueur d'onde appropriée, des espèces radicalaires ou ioniques qui vont favoriser et accélérer les processus de photoréticulation ou de photo-oxydation.

Ces photo-initiateurs utilisables sont de préférence du type radicalaire ou cationique. De tels composés sont couramment utilisés dans les domaines de la photopolymérisation de monomères multifonctionnels, du traitement de surface de matériaux par des revêtements protecteurs, des arts graphiques et en électronique pour la réalisation de microcircuits. Ils ont été également décrits (voir demande de brevet WO 2006/077059) dans des bandes de roulement photo-oxydables présentant une adhérence améliorée sur route mouillée.

Comme photo-initiateurs cationiques peuvent être cités par exemple les sels d'onium, plus particulièrement les sels de sulfonium tels que sels de triarylsulfonium ou les sels d'iodonium tels que sels de diaryliodonium.

On utilise préférentiellement un photo-initiateur du type radicalaire, plus préférentiellement choisi parmi les cétones aromatiques, notamment celles choisies dans le groupe constitué par les cétals (notamment dicétals) benzyliques, les benzoïnes (notamment éthers de benzoïnes), les $\alpha$,$\alpha$-dialkoxy-acétophénones, les $\alpha$-hydroxy-alkylphénones, les cétones $\alpha$-amino aromatiques (ou $\alpha$-amino alkylphénones), les oxydes d'acylphosphines, les benzophénones ou thioxanthones en combinaison avec un donneur d'hydrogène (e.g., une amine tertiaire), et les mélanges de tels composés.

L'homme du métier saura, le cas échéant, ajuster la quantité de photo-initiateur en fonction des applications particulières visées. Cette quantité est de préférence comprise entre 0,1 et 10 pce, plus préférentiellement entre 0,2 et 5 pce.

Les photo-initiateurs précédemment décrits peuvent être utilisés seuls lorsqu'ils sont exposés à un rayonnement UV ou, lorsqu'ils sont exposés à la lumière visible, en combinaison avec des photosensibilisateurs aptes à activer leur propre action photo-oxydante. De tels photosensibilisateurs sont par exemple des colorants tels que des phtaléïnes (éosine, érythrosine, éthyléosine, phloxine, rose de bengale) et des thiazines (thionine et bleu de méthylène). S'ils sont utilisés sans photosensibilisateurs, les photo-initiateurs seront préférentiellement choisis de telle manière que leur spectre d'absorption UV et le spectre d'émission de la source lumineuse (qu'elle soit naturelle comme artificielle) responsable de la photo-oxydation de la bande de roulement, aient bien une zone de recouvrement.

4.5. Additifs divers

La composition de caoutchouc thermo-expansible peut comporter également tout ou partie des additifs usuels habituellement utilisés dans les compositions de caoutchouc pour bandes de roulement, comme par exemple des agents de protection tels que cires anti-ozone, anti-ozonants chimiques, anti-oxydants, des agents plastifiants, des résines renforçantes, un système de réticulation à base soit de soufre, soit de donneurs de soufre et/ou de peroxyde et/ou de bismaléimides, des accélérateurs de vulcanisation, des activateurs de vulcanisation.

Selon un mode de réalisation préférentiel, la composition de caoutchouc thermo-expansible comporte également un agent plastifiant liquide (à 20°C) dont la fonction est de ramollir la matrice en diluant l'élastomère diénique et la charge renforçante ; sa Tg (température de transition vitreuse) est par définition inférieure à -20°C, de préférence inférieure à -40°C.

Plus préférentiellement, pour une performance optimale de la bande de roulement du bandage de l'invention, ce plastifiant liquide est utilisé à un taux relativement réduit, tel que le rapport pondéral charge renforçante non-noire sur agent plastifiant liquide soit supérieur à 2,0, plus préférentiellement supérieur à 2,5, en particulier supérieur à 3,0.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les plastifiants liquides choisis dans le groupe constitué par les huiles naphténiques (à basse ou haute viscosité, notamment hydrogénées ou non), les huiles paraffiniques, les huiles MES (*Medium Extracted Solvates*), les huiles DAE (*Distillate Aromatic Extracts*), les huiles TDAE *(Treated Distillate Aromatic Extracts),* les huiles RAE (*Residual Aromatic Extract oils*), les huiles TRAE (*Treated Residual Aromatic Extract),* les huiles SRAE *(Safety Residual Aromatic Extract oils),* les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

A titre de plastifiants phosphates par exemple, on peut citer ceux qui contiennent entre 12 et 30 atomes de carbone, par exemple le trioctyle phosphate. A titre d'exemples de plastifiants esters, on peut citer notamment les

composés choisis dans le groupe constitué par les trimellitates, les pyromellitates, les phtalates, les 1,2-cyclohexane dicarboxylates, les adipates, les azélates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en $C_{18}$, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour bandages.

Selon un autre mode de réalisation préférentiel, la composition de caoutchouc selon l'invention peut comporter aussi, à titre de plastifiant solide (à 23°C), une résine plastifiante hydrocarbonée présentant une Tg supérieur à +20°C, de préférence supérieure à +30°C, telle que décrite par exemple dans les demandes WO 2005/087859, WO 2006/061064 ou WO 2007/017060.

Les résines hydrocarbonées sont des polymères bien connus de l'homme du métier, essentiellement à base de carbone et hydrogène, miscibles donc par nature dans les compositions d'élastomère(s) diénique(s) lorsqu'elles sont qualifiées en outre de "plastifiantes". Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :

- une Tg supérieure à 20°C (plus préférentiellement entre 40 et 100°C) ;
- une masse moléculaire moyenne en nombre (Mn) comprise entre 400 et 2000 g/mol (plus préférentiellement entre 500 et 1500 g/mol) ;
- un indice de polymolécularité (Ip) inférieur à 3, plus préférentiellement inférieur à 2 (rappel : Ip = Mw/Mn avec Mw masse moléculaire moyenne en poids).

La Tg de cette résine est mesurée de manière connue par DSC (*Differential Scanning Calorimetry*), selon la norme ASTM D3418. La macrostructure (Mw, Mn et Ip) de la résine hydrocarbonée est déterminée par chromatographie d'exclusion stérique (SEC) : solvant tétrahydrofurane ; température 35°C ; concentration 1 g/l; débit 1 ml/min ; solution filtrée sur filtre de porosité 0,45 $\mu$m avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus sont plus préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, les résines de copolymère coupe C9/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha- méthylstyrène, l'ortho-, méta-, para-méthylstyrène, le vinyletoluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe $C_9$ (ou plus généralement d'une coupe $C_8$ à $C_{10}$). De préférence, le composé vinyle-aromatique est du styrène ou un monomère vinylaromatique issu d'une coupe $C_9$ (ou plus généralement d'une coupe $C_8$ à $C_{10}$). De préférence, le composé vinylaromatique est le monomère minoritaire, exprimé en fraction molaire, dans le copolymère considéré.

Le taux de résine hydrocarbonée est préférentiellement compris entre 3 et 60 pce, plus préférentiellement entre 3 et 40 pce, notamment entre 5 et 30 pce.

Dans le cas où l'on souhaite augmenter la rigidité de la bande de roulement une fois expansée, sans réduire pour autant la teneur en plastifiant liquide ci-dessus, on pourra avantageusement incorporer des résines renforçantes

(e.g. accepteurs et donneurs de méthylène) tels que décrites par exemple dans WO 02/10269 ou US 7,199,175.

La composition de caoutchouc thermo-expansible peut également contenir des activateurs de couplage lorsqu'un agent de couplage est utilisé, des agents de recouvrement de la charge inorganique lorsqu'une charge inorganique est utilisée, ou plus généralement des agents d'aide à la mise en oeuvre (processabilité) susceptibles de manière connue, grâce à une amélioration de la dispersion de la charge dans la matrice de caoutchouc et à un abaissement de la viscosité des compositions, d'améliorer leur processabilité à l'état cru ; ces agents sont par exemple des hydroxysilanes ou des silanes hydrolysables tels que des alkyl-alkoxysilanes, des polyols, des polyéthers, des aminés, des polyorganosiloxanes hydroxylés ou hydrolysables.

4.6. Fabrication des compositions

Les compositions de caoutchouc sont fabriquées dans des mélangeurs appropriés, en utilisant par exemple trois phases de préparation successives selon une procédure générale connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase (non-productive) à plus basse température (de préférence inférieure à 100°C) au cours de laquelle est incorporé l'agent d'expansion, enfin une troisième phase de travail mécanique (parfois qualifiée de phase "productive") à basse température, typiquement inférieure à 120°C, par exemple entre 60°C et 100°C, phase de finition au cours de laquelle est incorporé le système de réticulation ou vulcanisation.

Un procédé utilisable pour la fabrication de telles compositions de caoutchouc comporte par exemple et de préférence les étapes suivantes :

- incorporer dans un mélangeur, à l'élastomère ou au mélange d'élastomères, au moins la charge non-noire, optionnellement du noir de carbone à un taux inférieur à 3 pce, le composé thermofusible, la résine polymère liquide photoréticulable, les éventuels autres additifs optionnels, en malaxant thermomécaniquement le tout, en une ou plusieurs fois, jusqu'à atteindre une température maximale comprise entre 130°C et 200°C ;
- refroidir l'ensemble à une température inférieure à 100°C ;
- puis incorporer l'agent d'expansion au mélange ainsi obtenu et refroidi, en malaxant thermomécaniquement le tout jusqu'à atteindre une température maximale inférieure à 100 C ;
- incorporer ensuite un système de réticulation ;
- malaxer le tout jusqu'à une température maximale inférieure à 120°C ;
- extruder ou calandrer la composition de caoutchouc ainsi obtenue.

A titre d'exemple, on introduit au cours de la première phase non-productive, dans un mélangeur approprié tel qu'un mélangeur interne usuel, tous les constituants nécessaires, les éventuels agents de recouvrement ou de mise en oeuvre complémentaires et autres additifs divers, à l'exception de l'agent d'expansion et du système de réticulation. Après travail thermomécanique, tombée et refroidissement du mélange ainsi obtenu, on conduit alors une seconde phase (non-productive) de travail thermomécanique dans le même mélangeur interne, phase au cours de laquelle est incorporé l'agent d'expansion à une température plus modérée (par exemple 60°C), pour atteindre une température maximale de tombée inférieure à 100°C. On incorpore alors le système de réticulation à basse température, généralement dans un mélangeur externe tel qu'un mélangeur à cylindres ; le tout est alors mélangé (phase productive) pendant quelques minutes, par exemple entre 5 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 5 pce, celui de l'accélérateur primaire est de préférence compris entre 0,5 et 8 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

Si un acide carboxylique est utilisé comme composé thermofusible, ce dernier ayant comme effet possible celui de réduire le délai d'induction (c'est-à-dire le temps nécessaire au début de la réaction de vulcanisation) lors de la cuisson de la composition, on pourra utiliser avantageusement un retardateur de vulcanisation permettant de contrecarrer ce phénomène, et d'offrir ainsi à la composition de caoutchouc le temps nécessaire pour une expansion complète avant sa vulcanisation. Le taux de ce retardateur de vulcanisation est de préférence compris entre 0,5 et 10 pce, plus préférentiellement entre 1 et 5 pce, en particulier entre 1 et 3 pce.

Les retardateurs de vulcanisation sont bien connus de l'homme du métier. On peut citer par exemple le N-cyclohexylthiophtalimide commercialisé sous la dénomination « Vulkalent G » par la société Lanxess, le N-(trichlorométhylthio)benzène-sulfonamide commercialisé sous dénomination « Vulkalent E/C » par Lanxess, ou encore l'anhydride phtalique commercialisé sous dénomination « Vulkalent B/C » par Lanxess. De manière préférentielle, on utilise le N-cyclohexylthiophtalimide (en abrégé « CTP »).

La composition finale ainsi obtenue est ensuite calandrée par exemple sous la forme d'une feuille ou d'une plaque, notamment pour une caractérisation au laboratoire, ou encore calandrée ou extrudée sous la forme d'une bande de roulement thermo-expansible.

A l'état cru (i.e., non vulcanisé) et donc non expansé, la densité ou masse volumique notée $D_1$ de la composition de caoutchouc thermo-expansible est de préférence comprise entre 1,100 et 1,400 g/cm$^3$, plus préférentiellement comprise dans un domaine de 1,150 à 1,350 g/cm$^3$.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

C'est au cours de cette étape de vulcanisation que l'agent d'expansion va libérer une quantité de gaz importante, conduire à la formation de bulles dans la composition de caoutchouc mousse et finalement à son expansion.

A l'état cuit (i.e., vulcanisé), la densité notée $D_2$ de la composition de caoutchouc une fois expansée (i.e., à l'état de caoutchouc mousse) est comprise de préférence entre 0,700 à 1,000 g/cm$^3$, plus préférentiellement comprise dans un domaine de 0,750 à 0,950 g/cm$^3$.

Son taux d'expansion volumique noté $T_E$ (exprimé en %) est de préférence compris entre 25% et 75%, plus préférentiellement dans un domaine de 30 à 60%, ce taux d'expansion $T_E$ étant calculé de manière connue à partir des densités $D_1$ et $D_2$ ci-dessus, comme suit :

$$T_E = [(D_1/D_2) - 1] \text{ x } 100.$$

Comme expliqué précédemment, une ultime étape de photo-oxydation de la surface de la bande de roulement confère à cette dernière une adhérence améliorée sur glace sèche comme sur glace fondante. Cette étape complémentaire peut consister en une simple exposition naturelle au rayonnement UV-visible ou préférentiellement en un vieillissement artificiel accéléré, par exemple à l'aide d'une ou plusieurs lampe(s) émettant dans l'UV-visible (e.g. lampe à vapeur de mercure, lampe au xénon, lampe à fluorescence, lampes aux halogénures métalliques), ou encore dans une enceinte de photo-vieillissement accéléré pouvant comporter une ou plusieurs desdites lampes.

La composition de caoutchouc ainsi traitée offre aux bandages de l'invention une très bonne adhérence sur glace, à la fois sur glace sèche et sur glace fondante.

**Revendications**

1. Bandage dont la bande de roulement comporte, à l'état non vulcanisé, une composition de caoutchouc thermo-expansible comportant au moins un élastomère diénique, plus de 50 pce d'une charge renforçante non-noire, optionnellement du noir de carbone à un taux inférieur à 3 pce, entre 2 et 25 pce d'un agent d'expansion, entre 2 et 25 pce d'un composé thermofusible dont la température de fusion est comprise entre 60°C et 220°C, et entre 5 et 50 pce d'une résine polymère liquide photoréticulable.

2. Bandage selon la revendication 1, dans lequel l'élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

3. Bandage selon la revendication 2, dans lequel ladite composition de caoutchouc comporte 50 à 100 pce de caoutchouc naturel ou de polyisoprène de synthèse, ou 50 à 100 pce d'un polybutadiène ayant un taux de liaisons cis-1,4 supérieur à 90%.

4. Bandage selon l'une quelconque des revendications 1 à 3, dans lequel le taux de charge renforçante non-noire est

compris entre 50 et 150 pce, de préférence compris dans un domaine de 70 à 120 pce.

5. Bandage selon l'une quelconque des revendications 1 à 4, dans lequel l'agent d'expansion est un carbonate ou hydrogénocarbonate, de préférence choisi dans le groupe constitué par carbonate de sodium, hydrogénocarbonate de sodium, carbonate de potassium, hydrogénocarbonate de potassium, et les mélanges de tels carbonates.

6. Bandage selon l'une quelconque des revendications 1 à 5, dans lequel le taux d'agent d'expansion est compris entre 5 et 25 pce, de préférence entre 8 et 20 pce.

7. Bandage selon l'une quelconque des revendications 1 à 6, dans lequel la température de fusion du composé thermofusible est comprise entre 100°C et 200°C, de préférence entre 120 et 180°C.

8. Bandage selon l'une quelconque des revendications 1 à 7, dans lequel le composé thermofusible est un acide carboxylique, de préférence choisi dans le groupe constitué par l'acide malique, l'acide $\alpha$-cétoglutarique, l'acide citrique, l'acide stéarique et les mélanges de ces acides.

9. Bandage selon l'une quelconque des revendications 1 à 8, dans lequel la teneur totale en agent d'expansion et en composé thermofusible est supérieure à 10 pce, de préférence supérieure à 15 pce.

10. Bandage selon l'une quelconque des revendications 1 à 9, dans lequel la résine polymère liquide photoréticulable est choisie dans le groupe constitué par les résines acrylate, méthacrylate, époxyde, oxétane, polyester insaturé, vinyléther, vinylester et les mélanges de telles résines, de préférence est une résine acrylate ou méthacrylate.

11. Bandage selon l'une quelconque des revendications 1 à 10, dans lequel la résine polymère liquide photoréticulable est un polymère diénique, de préférence un polybutadiène ou un polyisoprène.

12. Bandage selon les revendications 10 et 11, dans lequel la résine polymère liquide photoréticulable est un poly(butadiène-acrylate) ou un poly(butadiène-méthacrylate).

13. Bandage selon l'une quelconque des revendications 1 à 12, dans lequel la composition de caoutchouc thermoexpansible comporte en outre un agent plastifiant liquide à 20°C, de préférence à un taux tel que le rapport pondéral charge renforçante non-noire sur agent plastifiant liquide est supérieur à 2,0, de préférence supérieur à 2,5.

14. Bandage selon l'une quelconque des revendications 8 à 13, dans lequel la composition de caoutchouc thermoexpansible comporte en outre un retardateur de vulcanisation, de préférence à un taux compris entre 0,5 et 10 pce.

15. Bandage à l'état vulcanisé, obtenu après cuisson d'un bandage selon l'une quelconque des revendications 1 à 14.

## Patentansprüche

1. Reifen, dessen Laufstreifen im nichtvulkanisierten Zustand eine wärmedehnbare Kautschukzusammensetzung aufweist, die mindestens ein Dien-Elastomer, mehr als 50 phr eines verstärkenden Füllstoffs, der nicht schwarz ist, möglicherweise Ruß zu einem Anteil von weniger als 3 phr, zwischen 2 und 25 phr eines Treibmittels, zwischen 2 und 25 phr einer heißschmelzbaren Verbindung deren Schmelztemperatur im Bereich zwischen 60 °C und 220 °C liegt, sowie zwischen 5 und 50 phr eines durch Lichteinwirkung vernetzbaren flüssigen Polymerharzes aufweist.

2. Reifen nach Anspruch 1, wobei das Dien-Elastomer aus der Gruppe ausgewählt ist, die aus natürlichem Kautschuk, den Polyisoprenen synthetischen Ursprungs, den Polybutadienen, den Butadien-Copolymeren, den Isopren-Copolymeren und den Mischungen dieser Elastomere besteht.

3. Reifen nach Anspruch 2, wobei die Kautschukzusammensetzung 50 bis 100 phr an natürlichem Kautschuk oder an Polyisopren synthetischen Ursprungs, oder 50 bis 100 phr an Polybutadien mit einem Anteil an cis-1,4-Bindungen von mehr als 90 % aufweist.

4. Reifen nach einem beliebigen der Ansprüche 1 bis 3, wobei der Anteil an verstärkendem Füllstoff, der nicht schwarz ist, im Bereich von 50 bis 150 phr, vorzugsweise im Bereich von 70 bis 120 phr liegt.

5. Reifen nach einem beliebigen der Ansprüche 1 bis 4, wobei es sich bei dem Treibmittel um ein Carbonat oder Hydrogencarbonat handelt, welches vorzugsweise aus der Gruppe ausgewählt ist, die aus Natriumcarbonat, Natriumhydrogencarbonat, Kaliumcarbonat, Kaliumhydrogencarbonat und Mischungen derartiger Carbonate besteht.

6. Reifen nach einem beliebigen der Ansprüche 1 bis 5, wobei der Anteil an verstärkendem Füllstoff, der nicht schwarz ist, im Bereich von 5 bis 25 phr, vorzugsweise im Bereich von 8 bis 20 phr, liegt.

7. Reifen nach einem beliebigen der Ansprüche 1 bis 6, wobei die Schmelztemperatur der heißschmelzbaren Verbindung im Bereich von 100 °C bis 200 °C, vorzugsweise von 120 bis 180 °C, liegt.

8. Reifen nach einem beliebigen der Ansprüche 1 bis 7, wobei es sich bei der heißschmelzbaren Verbindung um eine Carbonsäure handelt, die vorzugsweise aus der Gruppe ausgewählt ist, welche aus Äpfelsäure, $\alpha$-Ketoglutarsäure, Citronensäure, Stearinsäure und Mischungen dieser Säuren besteht.

9. Reifen nach einem beliebigen der Ansprüche 1 bis 8, wobei der Gesamtgehalt an Treibmittel und an heißschmelzbarer Verbindung größer als 10 phr ist, vorzugsweise größer als 15 phr.

10. Reifen nach einem beliebigen der Ansprüche 1 bis 9, wobei das durch Lichteinwirkung vernetzbare flüssige Polymerharz aus der Gruppe ausgewählt ist, welche aus den Acrylat-, Methacrylat-, Epoxid-, Oxetan-, den ungesättigten Polyester-, den Vinylether-, Vinylesterharzen und den Mischungen derartiger Harze besteht, wobei es sich vorzugsweise um ein Acrylat- oder Methacrylatharz handelt.

11. Reifen nach einem beliebigen der Ansprüche 1 bis 10, wobei es sich bei dem durch Lichteinwirkung vernetzbaren flüssigen Polymerharz um ein Dien-Polymer handelt, vorzugsweise um ein Polybutadien oder ein Polyisopren.

12. Reifen nach den Ansprüchen 10 oder 11, wobei es sich bei dem durch Lichteinwirkung vernetzbaren flüssigen Polymerharz um ein Poly(butadienacrylat) oder ein Poly(butadienmethacrylat) handelt.

13. Reifen nach einem beliebigen der Ansprüche 1 bis 12, wobei die wärmedehnbare Kautschukzusammensetzung darüber hinaus einen Weichmacher aufweist, der bei 20 °C flüssig ist, vorzugsweise zu einem derartigen Anteil, dass das Gewichtsverhältnis zwischen dem verstärkenden Füllstoff, der nicht schwarz ist, und dem flüssigen Weichmacher mehr als 2,0, vorzugsweise mehr als 2,5, beträgt.

14. Reifen nach einem beliebigen der Ansprüche 8 bis 13, wobei die wärmedehnbare Kautschukzusammensetzung darüber hinaus einen Vulkanisationsverzögerer aufweist, vorzugsweise zu einem Anteil im Bereich von 0,5 bis 10 phr.

15. Reifen im vulkanisierten Zustand, welcher nach dem Erhitzen eines Reifens nach einem beliebigen der Ansprüche 1 bis 14 erhalten wurde.

**Claims**

1. Tyre, the tread of which comprises, in the non-vulcanized state, a heat-expandable rubber composition comprising at least one diene elastomer, more than 50 phr of a non-black reinforcing filler, optionally carbon black at a content of less than 3 phr, between 2 and 25 phr of a blowing agent, between 2 and 25 phr of a hot-melt compound, the melting point of which is between 60°C and 220°C, and between 5 and 50 phr of a liquid photocrosslinkable polymer resin.

2. Tyre according to Claim 1, in which the diene elastomer is selected from the group consisting of natural rubber, synthetic polyisoprenes, polybutadienes, butadiene copolymers, isoprene copolymers and the mixtures of these elastomers.

3. Tyre according to Claim 2, in which the said rubber composition comprises from 50 to 100 phr of natural rubber or of synthetic polyisoprene, or from 50 to 100 phr of a polybutadiene having a content of cis-1,4-bonds of greater than 90%.

4. Tyre according to any one of Claims 1 to 3, in which the content of non-black reinforcing filler is between 50 and 150 phr and preferably within a range from 70 to 120 phr.

5. Tyre according to any one of Claims 1 to 4, in which the blowing agent is a carbonate or hydrogencarbonate, preferably selected from the group consisting of sodium carbonate, sodium hydrogencarbonate, potassium carbonate, potassium hydrogencarbonate and the mixtures of such carbonates.

6. Tyre according to any one of Claims 1 to 5, in which the content of blowing agent is between 5 and 25 phr and preferably between 8 and 20 phr.

7. Tyre according to any one of Claims 1 to 6, in which the melting point of the hot-melt compound is between 100°C and 200°C and preferably between 120°C and 180°C.

8. Tyre according to any one of Claims 1 to 7, in which the hot-melt compound is a carboxylic acid, preferably selected from the group consisting of malic acid, $\alpha$-ketoglutaric acid, citric acid, stearic acid and the mixtures of these acids.

9. Tyre according to any one of Claims 1 to 8, in which the total content of blowing agent and of hot-melt compound is greater than 10 phr and preferably greater than 15 phr.

10. Tyre according to any one of Claims 1 to 9, in which the liquid photocrosslinkable polymer resin is selected from the group consisting of acrylate, methacrylate, epoxide, oxetane, unsaturated polyester, vinyl ether and vinyl ester resins and the mixtures of such resins, preferably is an acrylate or methacrylate resin.

11. Tyre according to any one of Claims 1 to 10, in which the liquid photocrosslinkable polymer resin is a diene polymer, preferably a polybutadiene or a polyisoprene.

12. Tyre according to Claims 10 and 11, in which the liquid photocrosslinkable polymer resin is a poly(butadiene/acrylate) or a poly(butadiene/methacrylate).

13. Tyre according to any one of Claims 1 to 12, in which the heat-expandable rubber composition additionally comprises a plasticizing agent which is liquid at 20°C, preferably at a content such that the ratio by weight of non-black reinforcing filler to liquid plasticizing agent is greater than 2.0 and preferably greater than 2.5.

14. Tyre according to any one of Claims 8 to 13, in which the heat-expandable rubber composition additionally comprises a vulcanization retarder, preferably at a content of between 0.5 and 10 phr.

15. Tyre in the vulcanized state, obtained after curing a tyre according to any one of Claims 1 to 14.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 3878147 A
- JP 3159803 A
- JP 2002 A
- JP 211203 A
- WO 2008080750 A
- WO 2008080751 A
- WO 2010009850 A
- WO 2011073188 A
- WO 2011086061 A
- WO 2012052331 A
- WO 2012085063 A
- WO 2009083125 A
- WO 2009112220 A
- JP 2003183434 A
- JP 2004091747 A
- JP 2006299031 A
- JP 2007039499 A
- JP 2007314683 A
- JP 2008001826 A
- JP 2008150413 A
- EP 826522 A
- US 5147477 A
- US 6336487 B
- WO 2011064128 A
- US 6013718 A
- US 5977238 A
- US 6815473 B
- US 20060089445 A
- US 6503973 B
- WO 03016387 A
- WO 9928376 A
- WO 0073372 A
- WO 02053634 A
- WO 2004003067 A
- WO 2004056915 A
- WO 03002648 A
- WO 03002649 A
- US 2005016651 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- WO 2006077059 A
- WO 02088238 A
- WO 2005087859 A
- WO 2006061064 A
- WO 2007017060 A
- WO 0210269 A
- US 7199175 B


### Littérature non-brevet citée dans la description


- **BRUNAUER-EMMETT-TELLER.** *The Journal of the American Chemical Society,* Février 1938, vol. 60, 309